# EUROPÄISCHE PATENTSCHRIFT

(11) **EP 1 505 377 B1**
(45) Veröffentlichungstag und Bekanntmachung des Hinweises auf die Patenterteilung: **02.11.2005**
(21) Anmeldenummer: 03018172.1
(22) Anmeldetag: 08.08.2003
(51) Int. Cl.: G01L 7/08, G01L 19/14

(54) **Einfach modifizierbares Druckmessgerät durch Membranfederträger**
Pressure measuring device which can be be modified simply using a diaphragm spring carrier
Appareil de mesure de pression modifiable simplement par un support de ressort à diaphragme

(43) Veröffentlichungstag der Anmeldung: 09.02.2005
(73) Patentinhaber: WIKA Alexander Wiegand GmbH & Co.KG, 63911 Klingenberg/Main (DE)
(72) Erfinder: Barmettler, Peter, 6331 Hünenberg (CH); Arnold, Andreas, 6285 Hitzkirch (CH); Grunder, Kurt, 5736 Burg (CH)
(74) Vertreter: TBK-Patent

(56) Entgegenhaltungen:
- DE-A- 19 859 507
- GB-A- 498 357
- GB-A- 1 401 925
- US-A- 5 000 049
- US-A- 5 612 496
- US-B1- 6 168 566

## Beschreibung

Die Erfindung betrifft ein Druckmessgerät mit einer Membranfeder. Bekannte derartige Messgeräte haben ein topfförmiges steifes Federunterteil an dessen oberem Rand eine Membranfeder dicht verbunden ist, so dass das Federunterteil und die Membranfeder einen dichten Druckraum, begrenzen, wobei der Druckraum mittels einer Anschlussöffnung mit der Quelle des zu messenden Drucks kommuniziert.

In alternativen bekannten Bauformen können auch zwei Membranfedern randseitig miteinander als Kapsel verlötet sein und hierdurch einen inneren Druckraum bilden. Üblicherweise werden Membranen verwendet, die konzentrisch angeordnete Wellen eingeprägt haben, wobei die Wellen üblicherweise in etwa sinusförmig sind. Diese Membranen sind meist aus Metall, Sondermetall, Buntmetall gefertigt und haben einen linearen Federweg senkrecht zu ihrer Hauptebene und innerhalb ihres elastischen Bereichs der Verformung.

Wird der von mindestens einer Membranfeder begrenzte Druckraum mit Druck beaufschlagt, wird diese ausgelenkt. Ein Aufnehmer registriert diese Auslenkung und interpretiert sie als vorherrschenden Druck in dem Druckraum. Der Aufnehmer kann ein Messgetriebe sein, das die lineare Membranfederauslenkung in eine Drehbewegung eines Zeigers umsetzt. Dem Zeiger ist ein Zifferblatt mit einer Skalierung zugeordnet, auf dem der gemessene Druckwert abgelesen werden kann. Ein Druckmessgerät, das ein steifes Federunterteil mit einer angelöteten Membranfeder verwendet, ist aus der DE 36 27 365 C2 bekannt.

Ferner ist aus der DE 35 09 509 eine Druckmessgerät bekannt, das eine topfförmige Druckkammer in einem steifen Körper ausgebildet hat, die von einer Membran verschlossen ist, die auf den Topfrand aufgelötet ist. Nach der Art eines Bajonettverschlusses arbeitende Haltelemente sind an der Druckkammer und einem zugeordneten Druckaufnehmer ausgebildet, so dass die Druckkammer unter vorgegebener Vorspannung oder Auflagekraft mit dem Druckaufnehmer verbunden werden kann.

Figur 5 in der US-B1-6,168,566 zeigt ein entsprechendes Druckmessgerät.

Demgegenüber ist es Aufgabe der Erfindung, ein Druckmessgerät vorzuschlagen, das einfach aufgebaut ist, einfach und sicher zu montieren ist und mit dem durch einfache Modifikation weniger Teile ein großes Typenspektrum abgedeckt werden kann.

Diese Aufgabe wird mit einem Druckmessgerät mit den Merkmalen des Anspruchs 1 gelöst.

Ein Druckmessgerät mit einer Membranfeder hat einen Messkammerkörper, der eine Messkammer begrenzt und hat eine Membranfeder, die die Messkammer des Messkammerkörpers dicht verschließt und einem Druck in der Messkammer folgend auslenkbar ist. Ein Membranfederträger, der die Membranfeder an einem Umfangsbereich abstützt, ist mit dem Messkammerkörper verbindbar. In verbundenem Zustand von Messkammerkörper und Membranfederträger ist ein Dichtring zwischen dem Umfangsbereich der Membranfeder und dem Messkammerkörper eingespannt, der zwischen dem Umfangsbereich der Membranfeder und dem Umfangsbereich der Messkammer abdichtet.

Durch diese Ausgestaltung kann eine separate Verbindung der Membranfeder mit dem Rand der Messkammer entfallen, so dass aufwendige Fertigungsschritte wie Positionieren und gasdichtes Verlöten oder Verschweißen der Membranfeder mit dem Messkammerkörper eingespart werden können. Dadurch wird der Fertigungsablauf erheblich vereinfacht.

Vorzugsweise wird die Verbindung zwischen dem Membranfederträger und dem Messkammerkörper, wodurch die dichte Verbindung von Membranfeder und Messkammer erreicht wird, mittels einer Rast- oder Schnappverbindung zwischen Membranfederträger und Messkammerkörper erzielt, so dass eine einfache Montage durch Zusammenführen und Zusammendrücken der beiden Teile ermöglicht ist.

Die Verlagerung der gasdichten Verbindung von Membranfeder und Messkammerrand auf die Teile Membranfederträger, Messkammerkörper und Dichtung hat zudem die Wirkung, dass sich eine stets gleiche Relativlage zwischen Membranfeder und Membranfederträger einstellt, die durch die Maße bzw. Relativlage der Elemente der Verbindungselemente (Rastverbindung) vorgegeben ist. Durch die Verbindung wird die Membranfeder nur randseitig eingespannt und nicht, wie bei der herkömmlichen Verlötung, thermisch beansprucht, so dass eine ungewollte Verformung der Membranfeder sicher vermieden werden kann.

Dies hat den Vorteil, dass ein an dem Membranfederträger vorgesehener Aufnehmer zur Aufnahme der Membranauslenkung stets in einer durch die Maße der Bauteile vorgegebenen Relativlage zur Membranfeder positioniert wird, wodurch eine aufwendige Justierung dieser Relativlage entfallen kann. Folglich kann auch der Membranfederträger einfach gestaltet sein, weil keine Justiereinrichtungen daran vorgesehen werden müssen.

Der Membranfederträger ist so gestaltet, dass er mehrere, für verschiedene Aufnehmertypen angepasste Aufnahmen aufweist, so dass stets der gleiche Membranfederträger für verschiedene Typen von Druckmessgeräten verwendet werden kann. Diese Aufnahmen können mit geeigneten Führungen, Anschlägen, Schraubbohrungen etc. versehen sein, so dass die Montage der Aufnehmer ohne komplexe Hilfsvorrichtungen schnell und stets lagerichtig erfolgen kann.

In einer vorteilhaften Ausgestaltung der Erfindung ist der Messkammerkörper becherförmig und hat im Becherbodenbereich die Messkammer ausgebildet, während die Becherwand mit Aufnahmen zur Festlegung des Membranfederträgers versehen ist. Der zugehörige Membranfederträger ist in die Becheröffnung des Messkammerkörpers einführbar und ist an seinem Außenumfang mit Gegenstücken versehen, die mit den Aufnahmen des Messkammerkörpers verriegeln können. Dies kann verwirklicht sein, indem Rastnuten in der Becherwand ausgebildet sind, mit denen Rastklinken oder -laschen am Außenumfang des Membranfederträgers in der Endlage verriegeln.

Der Membranfederträger hat vorzugsweise stirnseitig eine ringförmige Stützfläche zur Anlage mit der Membranfeder, wobei diese Stützfläche die Membranfeder gegen den Dichtring presst. Der Raum innerhalb der Stützfläche ist vorzugsweise frei und gestattet den Durchgriff des Aufnehmers zur Membranfeder.

Alternativ kann ein starres bzw. federndes Membranbett in dem Raum innerhalb der Stützfläche vorgesehen sein, das die Membranfeder bei Überlastung, d.h. vor Erreichen des Bereichs plastischer Verformung abstützt, so dass eine Zerstörung des Druckmessgeräts durch zu hohen Überdruck vermieden werden kann, bzw. um eine Druckmessung in einem höheren Druckbereich zu ermöglichen. Das Membranbett hat ebenfalls eine geeignete Öffnung zum Durchgriff des Aufnehmers zur Membranfeder.

Zur Erleichterung der Montage ist es von Vorteil, wenn die Membranfeder am Membranfederträger provisorisch befestigt wird, damit eine Verschiebung der Membranfeder relativ zur Stützfläche beim Einführen des Membranfederträgers in den Messkammerkörper vermieden ist. Dazu sind vorzugsweise geeignete Halteeinrichtungen am Rand der Stützfläche ausgebildet. Diese Halteeinrichtungen können Vorsprünge mit einer Aufnahmekerbe zum Einrasten der Membranfeder oder Vorsprünge sein, die zur Festlegung der Membranfeder bleibend verformbar sind. Bei einer Fertigung des Membranfederträgers aus Kunststoff können die bleibend zu verformenden Vorsprünge mittels Ultraschall erweicht und verformt werden; dadurch wird eine thermische Beaufschlagung der Membranfeder vermieden. Im letztgenannten Fall kann auch eine Ultraschallverschweißung der Membranfeder mit der Stützfläche, zumindest abschnittsweise, erfolgen, wobei in diesem Fall die Vorsprünge als Führung dienen und ggf. selbst zusätzlich verformt werden können.

Ein erfindungsgemäßes Druckmessgerät wird vorzugsweise als mechanisches analoges Zeigergerät verwendet. Dazu ist der Aufnehmer ein Messgetriebe, das eine Auslenkung der Membranfeder in eine Zeigerdrehung umwandelt. In diesem Fall hat der Membranfederträger vorzugsweise eine Befestigungsaufnahme für ein Zifferblatt einer Anzeigeeinrichtung mit einem Zeiger, der mit dem Messgetriebe wirkverbunden ist. Es gibt Messgetriebe mit oder ohne Nullpunktkorrektur, die mit dem erfindungsgemäßen Druckmessgerät verwendet werden können.

Ferner eignet sich die vorliegende Erfindung insbesondere zur Abdeckung eines breiten Typenspektrums von Druckmessgeräten. Neben verschiedenen Druckmessbereichen, die durch entsprechende Auswahl unterschiedlich steifer aber hinsichtlich den Hauptabmessungen baugleicher Membranen abgedeckt werden können, sind es insbesondere verschiedene Gehäusedurchmesser, verschiedene Gehäusematerialien und verschiedene Anschlussformen, die eine große Zahl verschiedener Bauteile erfordern.

Durch die erfindungsgemäße Vorgehensweise, stets den gleichen Membranfederträger zusammen mit einem stets gleich gestalteten Messkammerkörper als Grundbausteine zu verwenden, lässt sich die Zahl der Gleichteile für verschiedene Druckmessgerätetypen erhöhen, ohne dass eine separate Entwicklung und Fertigung für jeden Typ erforderlich ist.

Beispielsweise kann bei Kunststoffgehäusen der stets gleiche Messkammerkörper gleichzeitig mit dem Gehäuse einstückig z.B. durch Spritzgießen gefertigt werden. Die Gehäuse unterscheiden sich nur in der Außenform und der Lage des Anschlusses, sind im Innern jedoch baugleich, so dass die weiteren Funktionselemente, wie Membranfederträger, Messgetriebe, Dichtring stets gleich sein können. Die Lage des Anschlusses, d.h. radial außen oder axial hinten, wird bei der Gestaltung der Spritzgussform bereits berücksichtigt und der Anschluss ist entsprechend am Gehäuse angeformt.

Für den Anschluss von Druckmessgeräten ist in der Regel ein Metallgewinde erforderlich. Das erfindungsgemäße Druckmessgerät ist vorzugsweise so gestaltet, dass ein stets baugleicher Anschlussstutzen aus Metall sowohl an dem Radialanschluss als auch an dem Axialanschluss von Kunststoffgehäusen angebracht werden kann.

Dazu ist vorzugsweise vorgesehen, dass der Anschlussstutzen eine Dichtfläche hat, die mit einem dichtend in der Anschlussbohrung des Gehäuses anliegenden Dichtring eine dichte Verbindung zwischen Bohrung und Stutzen sicherstellt. Zur Sicherung des Anschlussstutzens am Gehäuse wird vorzugsweise ein quer zum Stutzen und der Bohrung angeordneter Sicherungsstift verwendet, der nach dem Einführen des Anschlussstutzens in die Anschlussbohrung seitlich in eine im Stutzen ausgebildete Nut eingreift. Um eine unerwünschte Drehung des Gehäuses relativ zu dem Stutzen zu verhindern, hat der Stutzen vorzugsweise einen Vierkant an seinem Außenumfang und das Gehäuse hat eine dazu passende Aufnahme ausgebildet, in die ein Abschnitt des Vierkants eingreift, wenn der Stutzen mit dem Verriegelungsstift verriegelt ist. Der aus dem Gehäuse vorstehende Abschnitt des Vierkants dient gleichzeitig als Werkzeugangriffsfläche zur Montage des Druckmessgeräts am Einbauort. Statt des Vierkants kann natürlich auch ein Sechskant oder eine andere nicht rotationssymmetrische Form verwendet werden.

Während, wie zuvor beschrieben, für die Anschlussvariation bei Kunststoffgehäusen zwei verschiedene Gehäusetypen mit den immer gleichen Membranfederträgern, Dichtringen, Messgetrieben und Anschlussstutzen kombiniert werden, da der Messkammerkörper immer gleich ist, wird bei Metallgehäusen vorzugsweise folgende Vorgehensweise gewählt.

Ein stets gleicher Messkammerkörper mit einem Axialanschluss wird mit einem Metallgehäuse kombiniert, das eine entsprechende Bohrung oder Öffnung (radial oder axial) hat. Im Fall des radialen Anschlusses wird ein Anschlussstutzen verwendet, der einen quer zu seinem Gewindestutzen verlaufende Querbohrung hat. Eine Dichtfläche für einen Dichtring und eine Rastnut im Inneren der Querbohrung dienen zur Verbindung mit dem Axialanschluss des Messkammerkörpers. Der Messkammerkörper hat an seinem Axialanschluss eine Gegenfläche für den Dichtring und Rastnasen, die mit der Rastnut verriegeln können. Über den Dichtring wird so eine dichte Verbindung zwischen dem Axialanschluss und dem Anschlussstutzen erzielt, die von dem Rasteingriff sicher gehalten ist. Stege an der Rückseite des Messkammerkörpers verhindern eine Drehung des Messkammerkörpers gegenüber dem Anschlussstutzen. Das Gehäuse wird mit einem geeigneten Befestigungsmittel mit dem Anschlussstutzen auf der Geräterückseite verbunden. Vorzugsweise hat der Anschlussstutzen einen aus dem Gehäuse vorstehenden Vierkant (Sechskant oder dgl.) als Werkzeugangriffsfläche.

Für eine axiale Ausführung des Anschlusses wird der baugleiche Messkammerkörper verwendet, wobei hier der Anschlussstutzen, mit der gleichen Anschlussmimik zum Messkammerkörper, als axiale Verlängerung aus dem Gehäuse heraus ausgebildet ist und eine Halteplatte für das Gehäuse hat. Das Gehäuse wird mit einem Befestigungsmittel an der Halteplatte festgelegt.

Im Fall der beschriebene Variationen der Anschlusslage bei Metallgehäusen kann ein immer gleicher Messkammerkörper zusammen mit stets gleichen Membranfederträgern, Dichtringen, und Messgetrieben verwendet werden wodurch die Zahl der Gleichteile erhöht ist und dadurch die Fertigungsabläufe zusammen mit der zugehörigen Teilebereitstellung und -bevorratung vereinfacht sind und die Flexibilität der Fertigung erhöht ist.

In einer weiteren vorteilhaften Ausgestaltung der Erfindung ist die Verbindung zwischen Membranfederträger und Messkammerkörper so gestaltet, dass der Membranfederträger in 90°-Schritten gegenüber dem Messkammerkörper verdreht montiert werden kann. Dadurch kann bei Radialanschlusstypen (mit Kunststoff- oder Metallgehäuse) der Radialanschluss bezüglich des Zifferblatts oder einer anderen Anzeigeeinrichtung oben, links, rechts oder unten angebracht werden. Für diese Varianten können stets die gleichen Teile verwendet werden; es ändert sich nur die Lage relativ zueinander bei der Montage.

Weitere vorteilhafte Ausgestaltungen sind in den übrigen Unteransprüchen aufgezeigt.

Die Erfindung wird nachfolgend anhand bevorzugter Ausführungsbeispiele unter Bezugnahme auf die Zeichnung näher erläutert. Darin ist:
Fig. 1 eine Schnittansicht eines Membranfedermanometers mit Kunststoffgehäuse und Radialanschluss gemäß einem ersten Ausführungsbeispiel der Erfindung;
Fig. 2 eine Schnittansicht eines Membranfedermanometers mit Kunststoffgehäuse und Axialanschluss gemäß einem zweiten Ausführungsbeispiel der Erfindung;
Fig. 3 eine vergrößerte Darstellung eines Membranfederträgers mit eingesetzter Membranfeder und aufgesetztem Messgetriebe;
Fig. 4 eine Perspektivansicht eines Messkammerkörpers gemäß einem weiteren Ausführungsbeispiel der Erfindung, der zur Verwendung in Metallgehäusen vorgesehen ist;
Fig. 5 eine Perspektivansicht des Messkammerkörpers aus Fig. 4, der mit dem Membranfederträger gemäß Fig. 3 zusammengebaut ist; und
Fig. 6 eine Modulstrukturübersicht, die die Verwendung des stets gleichen Membranfederträgers in verschiedenen Ausführungsformen eines damit ausgerüsteten Membranfedermanometers zeigt.

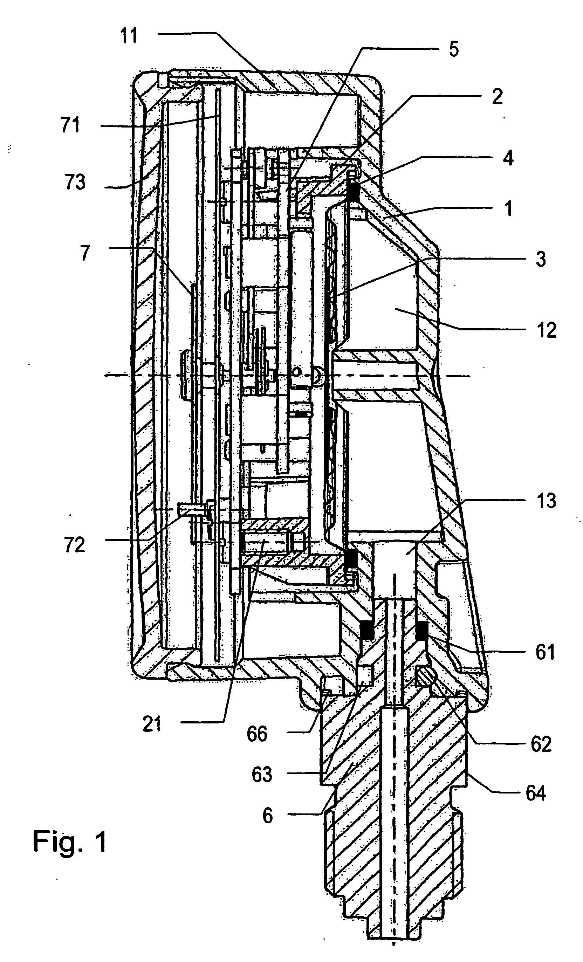

Fig. 1 zeigt eine Schnittansicht eines Druckmessgeräts mit einer Membranfeder, nachfolgend als Membranfedermanometer bezeichnet, das einen Messkammerkörper 1 hat, der von einem Gehäuseabschnitt 11 umgeben ist, der das spätere Außengehäuse des Druckmessgeräts bildet. Im Messkammerkörper 1 ist eine Messkammer 12 ausgebildet, die über eine Radialbohrung 13 mit einem Anschlussstutzen 6 verbunden ist. Die Messkammer 12 wird mit dem zu messenden Druck beaufschlagt, wobei der Druck über den Anschlussstutzen 6 und die Radialbohrung 13 in die Messkammer 12 eingeleitet wird. Die Messkammer 12 ist mit Hilfe eines Dichtrings 4 und einer Membranfeder 3 dicht verschlossen. Die Membranfeder 3 ist eine Metallmembran mit konzentrischen sinusförmigen Wellen. Die Membranfeder 3 weicht in Fig. 1 nach links aus, wenn der Druck in der Messkammer erhöht wird. Die Auslenkung der Membranfeder 3 ist druckproportional und wird mit einem geeigneten Aufnehmer 5, der hier als Messgetriebe ausgebildet ist, abgegriffen. Die Auslenkung der Membranfeder 3 wird von dem Messgetriebe 5 in eine Drehbewegung umgewandelt, die über eine geeignete Welle auf einen Zeiger 7 ausgegeben wird. Dem Zeiger 7 ist ein Zifferblatt 71 zugeordnet, auf dem eine entsprechende Skalierung zur Ablesung der Höhe des Drucks angebracht ist. Mit 72 ist ein Anschlag für den Zeiger dargestellt, an dem der Zeiger in Nulllage anschlägt. Ferner ist mit 73 eine im Wesentlichen durchsichtige Abdeckung bezeichnet, die mittels eines Rasteingriffs auf das Gehäuse 11 des Membranfedermanometers aufgesetzt ist.

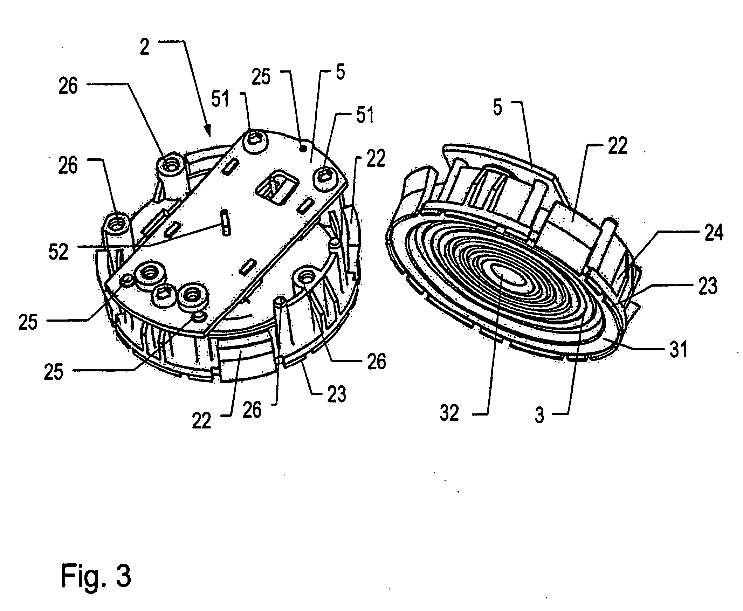

In Fig. 1 ist ferner mit 2 ein Membranfederträger bezeichnet, der später unter Bezugnahme auf Fig. 3 im Einzelnen noch näher erläutert wird. Ober den Membranfederträger 2 wird die Membranfeder 3 gegen den Dichtring 4 gepresst, wodurch die Messkammer 12 dicht verschlossen ist. Hierzu bedarf es keinerlei Klebung oder anderer Dichtmaßnahmen wie sie im Stand der Technik üblich sind, insbesondere können Lötvorgänge entfallen. Der Membranfederträger 2 hat, wie in Fig. 1 ferner zu erkennen ist, eine Aufnahme (hier als Bohrungen mit einer darin aufgenommenen Schraube 21 dargestellt) zur Aufnahme des Messgetriebes 5, das fest mit dem Membranfederträger 2 verbunden ist.

Ferner ist in Fig. 1 der in Verlängerung der Radialbohrung 13 angebrachte Anschlussstutzen 6 im Schnitt dargestellt. Der Anschlussstutzen 6 ist in die Radialbohrung 13 eingeführt, wobei ein Dichtring 61, der an jeweils im Gehäuse 11 bzw. Anschlussstutzen 6 ausgebildeten Dichtflächen dicht anliegt. Der Dichtring 61 ist im vorliegenden Fall ein O-Ring. Ein quer zur Haupterstreckungsrichtung des Anschlussstutzens 6 verlaufender Sicherungsstift 62 ist in eine Führungsbohrung im Gehäuse 11 eingesetzt und verriegelt den Anschlussstutzen 6 durch Eingriff mit einer darin ausgebildeten Ringnut 63.

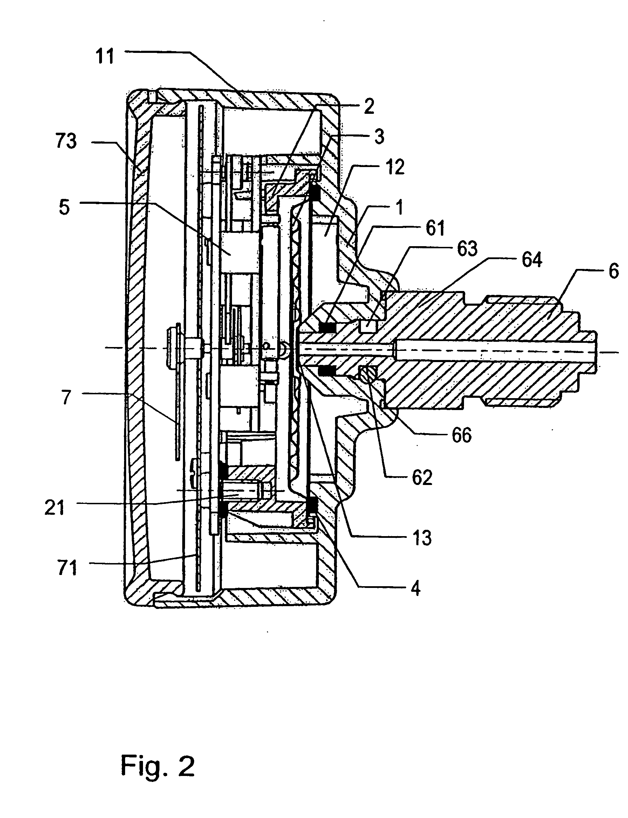

Ein zweites Ausführungsbeispiel eines Membranfedermanometers gemäß der Erfindung ist in Fig. 2 gezeigt. Funktionsgleiche Elemente sind mit den gleichen Bezugszeichen bezeichnet wie in Fig. 1, so dass deren genaue Erläuterung hier unterbleiben kann. Vielmehr sollen unter Bezugnahme auf die Fig. 2 die Unterschiede zur Fig. 1 erläutert werden. Im Unterschied zur Fig. 1 ist in Fig. 2 ein Membranfedermanometer mit axialem Anschluss gezeigt. Der axiale Anschluss ist mit einem Anschlussstutzen 6 versehen, der identisch aufgebaut ist, wie der Anschlussstutzen 6 der Fig. 1. Insbesondere ist in der gestuften Axialbohrung 13 des Messkammerkörpers 1 ein Dichtsitz für einen Dichtring 61 ausgebildet, der mit einer zugeordneten Dichtfläche des Anschlussstutzens 6 zusammenwirkt, um den Anschlussstutzen 6 gegenüber dem Messkammerkörper 1 abzudichten. Der Anschlussstutzen 6 ist mittels eines Sicherungsstifts 62 verriegelt, der in eine Führungsbohrung im Messkammerkörper 1 eingesetzt ist und in eine Ringnut 63 des Anschlussstutzens 6 eingreift und diesen in der Montageposition festlegt. Der Sicherungsstift 62 legt sowohl in Fig. 1 als auch in Fig. 2 den Anschlussstutzen 6 bezüglich des Manometergehäuses 11 lediglich in Axialrichtung des Anschlussstutzens 6 fest. Wegen der am Anschlussstutzen vorhandenen Ringnut ist dieser auch im Eingriff mit dem Stift gegenüber dem Gehäuse prinzipiell drehbar. Um diese Drehbarkeit zu verhindern, trägt der Anschlussstutzen 6 an seinem Außenumfang einen Vierkant 64, der mit einer im Gehäuse ausgebildeten ebenfalls vierkantförmigen Ausnehmung 66 im Gehäuse 11 bzw. im Messkammerkörper 1 in Eingriff ist. Der über das Gehäuse 11 bzw. den Messkammerkörper 1 vorstehende Abschnitt des Vierkants 64 des Anschlussstutzens 6 dient gleichzeitig als Werkzeugangriffsfläche zur Montage des Membranfedermanometers am Einbauort. Statt des Vierkants kann auch eine andere nicht rotationssymmetrische Form, insbesondere ein Sechskant vorgesehen sein.

In Fig. 3 ist ein vormontierter Membranfederträger 2 in zwei perspektivischen Ansichten gezeigt, der bereits mit der Membranfeder 3 und dem Messgetriebe 5 versehen ist. Der Membranfederträger 2 ist an seinem Umfang mit Rastklinken 22 versehen, die mit 90°-Teilung an vier Stellen des Umfangs ausgebildet sind. Ferner sind gegenüber den Rastklinken versetzt Versteifungen 24 ausgebildet, die den Membranfederträger ausbilden. Wie in Fig. 3 gut zu erkennen ist, ist der Membranfederträger 2 in etwa ringförmig und ist auf seiner einen Stirnseite mit der Membranfeder 3 ausgerüstet. Eine mit 31 bezeichnete Ringfläche am Außenumfang der Membranfeder 3 liegt auf einer entsprechend geformten Stützfläche (nicht dargestellt) auf, die im Wesentlichen die gleiche Form hat wie die ringförmige Fläche 31 in Fig. 3. Das Zentrum der Membranfeder 3 ist mit 32 bezeichnet; an diesem Zentrum wird von dem Messgetriebe 5 die Auslenkung der Membranfeder 3 abgegriffen. Einzelheiten zum Mechanismus des Messgetriebes 5 werden hier nicht erläutert.

In Fig. 3 sind ferner Axialvorsprünge 23, die einstückig mit dem Membranfederträger 2 ausgebildet sind, entlang des stirnseitigen Umfangs des Membranfederträgers 2 gezeigt. Diese axialen Vorsprünge 23 dienen der Führung bzw. Festlegung der Membranfeder 3 auf dem Membranfederträger 2. Durch diese Festlegung wird die Montage erleichtert, wenn der Membranfederträger, der mit der Membranfeder 3 und dem Messgetriebe 5 ausgerüstet ist, in den zugehörigen Messkammerkörper 1 eingesetzt wird. Die Vorsprünge 23 können an ihrer dem Innenumfang des Membranfederträgers 2 zugewandten Flanke mit einer Rastkerbe versehen sein, so dass die Membranfeder einfach eingerastet werden kann, und in Rastlage der entsprechenden Stützfläche des Membranfederträgers 2 gegenüberliegt. Alternativ können die Vorsprünge auch bleibend verformt werden, dies ist bei dem vorliegenden Kunststoffteil insbesondere durch Ultraschallbearbeitung möglich, ohne dabei die Membranfeder 3 thermisch zu beaufschlagen. Mit anderen Worten, die Vorsprünge 23 werden mit Ultraschall beaufschlagt und dadurch erweicht, wonach sie flachgedrückt werden können, so dass die Membranfeder 3 zwischen der Stützfläche des Membranfederträgers 2 und den somit verformten Vorsprüngen 23 gehalten ist.

Der Membranfederträger 2 hat ausweislich Fig. 3 ferner Aufnahmen ausgebildet, die zur Aufnahme eines Messgetriebes bzw. verschiedener Messgetriebe dient. Wie in Fig. 3 gezeigt ist, gibt es einerseits die Aufnahme 25 sowie die Aufnahme 26. In der Darstellung in Fig. 3 ist die Aufnahme 25 mit dem Messgetriebe 5 belegt, während die Aufnahme 26, die im 90°-Winkel dazu verläuft, frei ist, um ein anderes Messgetriebe alternativ zum Messgetriebe 5 aufzunehmen. Insbesondere unterscheiden sich diese Messgetriebe darin, dass im einen Fall eine Nullpunktkorrektur vorgesehen ist, während in dem hier gezeigten Fall von Fig. 3 ein Messgetriebe ohne Nullpunktkorrektur verwendet ist. Die Aufnahme 25 umfasst senkrechte Zapfen und Schraubenlöcher, die mit entsprechenden Bohrungen in einer Grundplatte des Messgetriebes 5 zusammenarbeiten. In die Bohrungen der Aufnahme 25 können dann Schrauben 51 eingesetzt werden, um dass Messgetriebe 5 sicher an den Membranfederträger 2 festzulegen. Wie in Fig. 3 gezeigt ist, steht in dieser Montagestellung eine Zeigerwelle 52 senkrecht auf der Rückseite des Membranfederträgers vor. Die Aufnahme 26 umfasst ebenfalls Zapfen und Schraubenlöcher, die ähnlich funktionieren wie die der Aufnahme 25. Lediglich andere Abstände bzw. Führungsbohrungen können dazu verwendet werden, insbesondere eine Falschmontage eines Messgetriebes an der falschen Aufnahme zu verhindern. Ferner sind für die Montage des Messgetriebes 5 hier Schrauben 51 in Fig. 3 verwendet. Es sei darauf hingewiesen, dass mit einer entsprechenden Gestaltung des Membranfederträgers diese Schrauben auch durch geeignete Rastelemente ersetzt werden können. Dies hängt jedoch von der Gestaltung des Messgetriebes sowie den Festigkeits- und Genauigkeitsanforderungen dieser Verbindung ab.

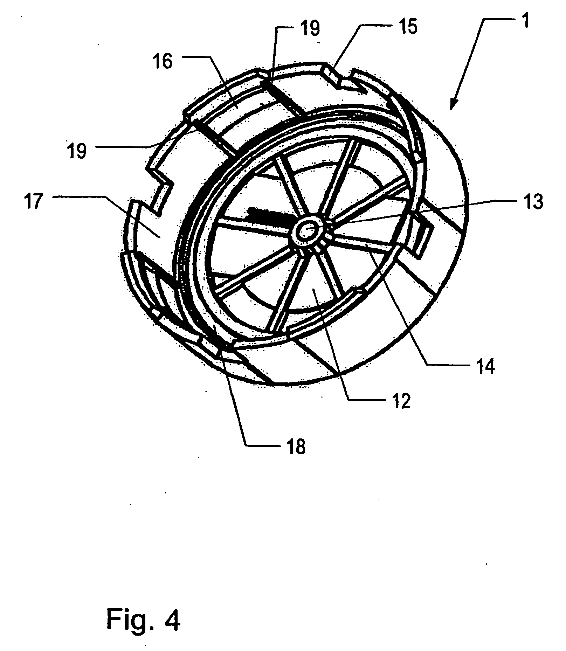

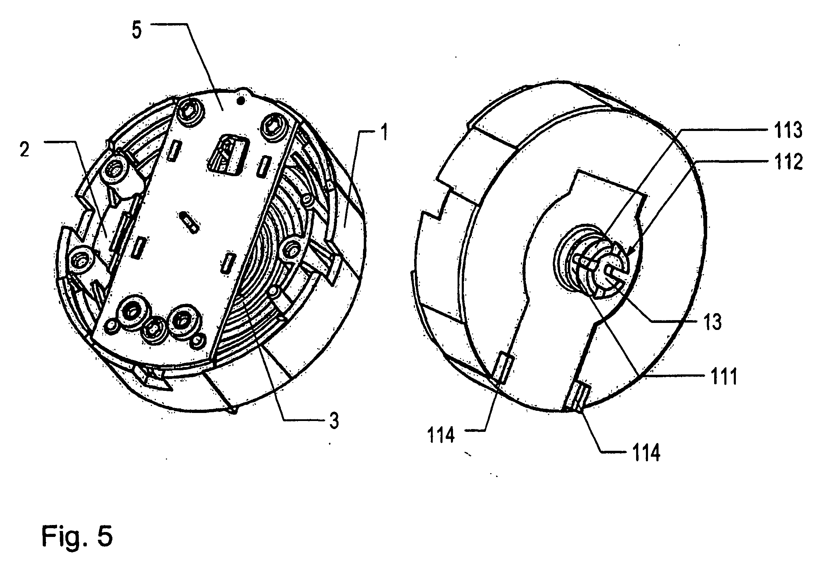

Nun wird anhand der Fig. 4, die einen Messkammerkörper 1 zeigt, die Montage des vormontierten Membranfederträgers beschrieben, was zum fertigen Gegenstand führt, der in Fig. 5 gezeigt ist. Fig. 4 zeigt einen Messkammerkörper, der zum Einbau in ein separates Gehäuse vorgesehen ist. Mit anderen Worten, der Messkammerkörper 1 entspricht dem Messkammerkörper aus Fig. 1 und 2, mit dem Unterschied, dass an diesem Messkammerkörper kein umgebendes Gehäuse angeformt ist. In allen Funktionsabschnitten hinsichtlich der Befestigung der Membranfeder bzw. Befestigung des Membranfederträgers, entspricht dieser Messkammerkörper genau jenem aus Fig. 1 oder Fig. 2. Mit anderen Worten, die nachfolgende Beschreibung des Messkammerkörpers 1 gilt für die Figuren 1 und 2 gleichermaßen. Der Messkammerkörper aus Fig. 4 ist ein im Wesentlichen becherförmiges Teil, mit einem Becherboden und einer Becherwand 17. Im Bereich des Becherbodens ist die Messkammer 12 ausgebildet, die über eine Anschlussöffnung 13 mit der Außenseite des Messkammerkörpers 1 verbunden ist. Um den Bodenabschnitt des Messkammerkörpers 1 zu versteifen, damit die Druckbeaufschlagung lediglich die Membranfeder auslenkt und nicht den Messkammerboden, sind Verstärkungsrippen 14 in der Messkammer 12 vorgesehen. Ferner ist am Umfangsbereich der Messkammer 12 eine Ringnut 18 vorgesehen, in die ein Dichtring (4 in Fig. 1 und 2) einzulegen ist, der zwischen dem Messkammerkörper und der Membranfeder abdichten soll. Ferner sind im Bereich der Becherwand 17 Aussparungen 15 sowie Rastnasen 16 gezeigt. Die Rastnasen dienen der Führung bzw. Festlegung des Membranfederträgers aus Fig. 3 in dem Messkammerkörper 1. Es ist anzumerken, dass die Rastnasen 16 sowie die Aussparungen 15 jeweils um 90° versetzt vierfach vorhanden sind, so dass es vier mögliche Einbaustellungen für den Membranfederträger 2 gibt. Wie in Fig. 1 und 2 deutlich zu erkennen ist, ist ein Dichtring 4 zwischen der Membranfeder 3 und dem Umfangsbereich der Messkammer 12 im Messkammerkörper 1 angeordnet. Die identische Anordnung ist in Fig. 4 getroffen, wobei hier die Nut 18 zur Aufnahme des Dichtrings angedeutet ist. Der Messkammerkörper 1 ist vorzugsweise aus Kunststoff gefertigt, es besteht aber grundsätzlich auch die Möglichkeit andere in eine solche Form zu bringende Materialen zu verwenden. In der in Fig. 4 gezeigten Ausführungsform sind Führungsrippen 19 im Bereich der Rasteinrichtung 16 vorgesehen, die in Axialrichtung des Messkammerkörpers 1 verlaufen und geringfügig in Richtung des Innenumfangs radial einwärts vorstehen. Diese Führungsrippen 19 begrenzen eine Bewegungsmöglichkeit der eingeführten Rastklinken 22 des Membranfederträgers 2, wodurch eine drehfeste Zuordnung zwischen dem Membranfederträger 2 und dem Messkammerkörper 1 erreicht ist.

Fig. 5 zeigt einen zusammengebauten Zustand eines mit Membranfeder 3 und Messgetriebe 5 ausgerüsteten Membranfederträgers 2 mit dem Messkammerkörper 1. Der Membranfederträger 2 ist so angeordnet, dass sich die Rastklinken 22 und die Rastmittel 16 des Messkammerkörpers 1 gegenüberliegen. Durch einfaches Eindrücken des Membranfederträgers 2 in den Messkammerkörper 1 wird der in Fig. 1 und 2 gezeigte Dichtring 4 zwischen der Membranfeder 3 und dem Messkammerkörper 1 zusammengepresst und dichtet den Membranumfang gegenüber dem Messkammerkörper 1 ab. Durch die Vormontage ist eine lagerichtige Zuordnung des Messgetriebes zur Membranfeder 3 durch den Membranfederträger 2 vorgegeben und erreicht; diese Zuordnung ändert sich durch das Einführen des Membranfederträgers 2 in den Messkammerkörper 1 nicht mehr. Durch diesen Aufbau ist folglich eine sehr einfache Endmontage eines Druckmessgeräts mit Membranfeder erreicht. Hier ist noch zu erwähnen, dass, obwohl in Fig. 5 die Rückseite der Membranfeder 3 zu sehen ist, ein entsprechendes Membranfederbett, federnd oder nicht, an dem Membranfederträger vorgesehen sein kann, um den Messbereich zu erweitern oder die Membranfeder beim Auftreten von Überdrücken in der Messkammer sicher abzustützen.

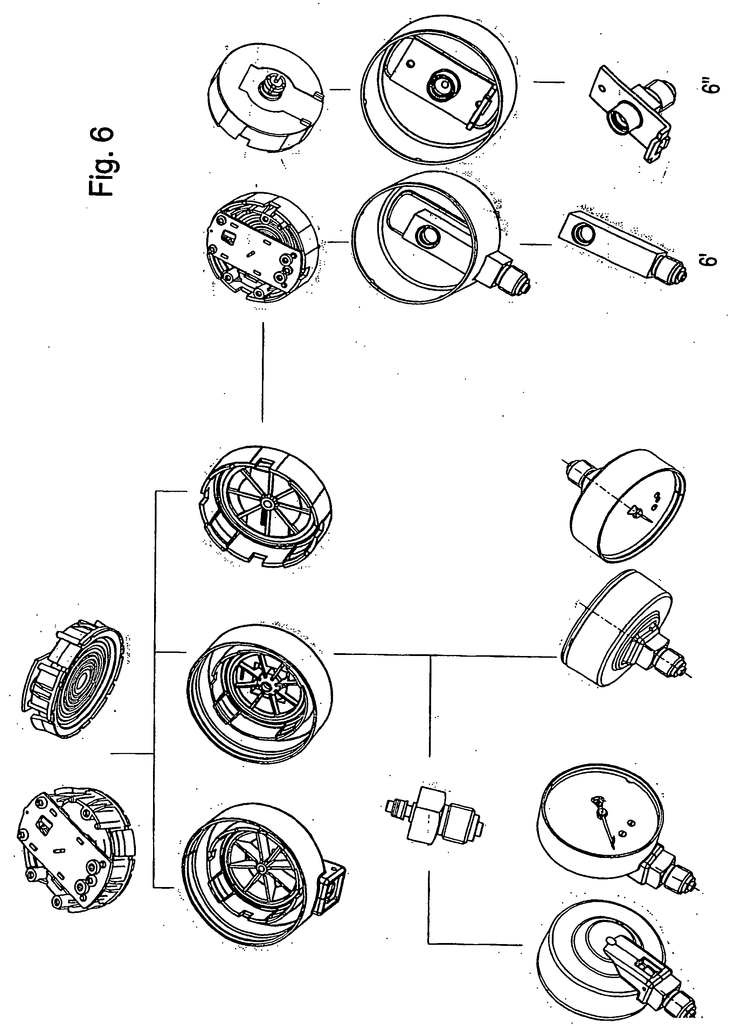

Des weiteren wird noch auf den Anschluss des Druckmessgeräts, das in Fig. 5 gezeigt ist, unter Bezugnahme auf die rechte Darstellung in Fig. 5 sowie unter Bezugnahme auf Fig. 6 eingegangen. In Fig. 5 auf der rechten Seite ist die Rückseite oder Rückansicht des Messkammerkörpers 1 dargestellt, wobei durch die gezeigte Lage der darin eingebaute Membranfederträger 2 nicht sichtbar ist. Ein Axialanschlussnippel 112 mit der Anschlussbohrung 13 ist in der Mitte der Rückseite des Messkammerkörpers 1 ausgebildet. Vorzugsweise erfolgt diese Ausbildung einstückig mit dem Messkammerkörper 1. Dieser axiale Anschlussnippel 112 hat einen Dichtungsabschnitt 111 und einen Rastabschnitt 113. Der Rastabschnitt 113 ist durch Einkerbungen in vier symmetrisch angeordnete Rastklinken unterteilt, die zum Eingriff mit einer Rastnut mit Rastnasen versehen sind. Die Dichtfläche 111 ist ausgelegt, mit einem O-Ring abzudichten. In Fig. 6 ganz unten rechts sind zwei alternative Anschlussstutzen 6' und 6" gezeigt, die mit dem Anschlussnippel 112 verbindbar sind. Der Radialanschlussnippel 6' hat eine sich zur Haupterstreckungsrichtung des Anschlussstutzens 6' quer erstreckende Bohrung zur Aufnahme des Anschlussnippels 112. Insbesondere ist in der Bohrung eine Dichtfläche zur Anlage mit einem Dichtring sowie, weiter im Inneren der Bohrung, eine Rastnut ausgebildet, in die die Rastklinken 113 des Anschlussnippels 112 einrasten können. Im eingerasteten Zustand liegt der Dichtring dichtend zwischen der Dichtfläche 111 des Anschlussnippels 112 und der zugehörigen Dichtfläche des Anschlussstutzens 6'. Ferner sind die Rastnasen der Rastklinken 113 in der Rastnut des Anschlussstutzens 6' eingerastet, so dass hier eine sichere und dichte Verbindung besteht. Da diese Verbindung jedoch im Prinzip drehbar ist, sind an der Rückseite des Messkammerkörpers 1 vorstehende Laschen 114 ausgebildet, die den Anschlussstutzen 6' an beiden Seiten erfassen, wenn diese beiden Teile zusammengefügt sind. Dadurch wird eine Drehung des Messkammerkörpers 1 gegenüber dem Anschlussstutzen 6' verhindert.

Zum Einbau in das Metallgehäuse wird hier auf die Fig. 6 verwiesen, in der die verschiedenen Fertigungsvarianten nochmals zusammenfassend erläutert werden. In Fig. 6 ganz rechts unten ist ein Anschlussstutzen 6" für den axialen Anschluss des in Fig. 5 gezeigten Messkammerkörpers 1 gezeigt. Mit der gleichen Nut- und Bohrungsgestaltung, die jedoch in Axialrichtung und nicht in Querrichtung verläuft, wie beim Anschluss 6', kann der Anschluss 6" einfach und dichtend auf den Messkammerkörper 1 aufgesteckt werden, wobei hier ebenfalls eine drehbare aber dichte Verbindung entsteht. Um die Drehbarkeit zu verhindern, ist an einem abgewinkelten Abschnitt einer Haltelasche des Anschlussstutzens 6' ein Vorsprung in der Breite ausgebildet, der der Breite des Anschlussstutzens 6' im Wesentlichen entspricht. Diese Vorsprung des Anschlussstutzens 6" ist in Einbaulage zwischen den Laschen 114 gehalten, so dass eine Relativdrehung zwischen Messkammerkörper 1 und Anschlussstutzen 6" nicht mehr möglich ist. Zum Einbau in ein Metallgehäuse wird hier ebenfalls auf Fig. 6 verwiesen.

Abschließend wird die Fig. 6 erläutert, die aufzeigen soll, dass sich eine Vielzahl verschiedener Varianten von Druckmessgeräten auf der Basis ein und desselben bestückten Membranfederträgers verwirklichen lässt, wodurch, wegen der Verwendung einer gleichen Baugruppe für viele verschiedene Varianten eine deutliche Einsparung im Fertigungs- und Montagebereich erzielt werden kann.

Oben links in Fig. 6 ist die aus Fig. 3 bekannte Perspektivansicht des bestückten Membranfederträgers 2 gezeigt, der als ein Druckmessmodul zum Einbau in verschiedene Messkammerkörpergestaltungen ausgelegt ist. Diese verschiedenen Messkammerkörpergestaltungen sind in der darunter liegenden Zeile in Fig. 6 zusammengestellt, dies sind insbesondere die mit einem Gehäuse versehenen Versionen des Messkammerkörpers mit radialem oder axialem Anschluss sowie der Messkammerkörper 1 gemäß Fig. 4, der ebenfalls mit dem Membranfederträger zur Bildung eines Druckmessgeräts verbaut werden kann. Um die in Fig. 6 gezeigten beiden linken aus Kunststoff bestehenden Druckmessgeräte mit angeformten Gehäuse zu vollständigen Druckmessgeräten zu vervollständigen, wird ein immer gleicher Anschlussstutzen 6 verwendet, der wie in Fig. 1 bzw. Fig. 2 gezeigt ist, mit dem Gehäuse zusammengebaut wird. Damit werden die in der unteren Zeile auf der linken Seite in Fig. 6 perspektivisch gezeigten beiden Typen von Messgeräten fertiggestellt. Hierbei ist anzumerken, dass bei dem äußersten linken Gehäusetyp der Fig. 6 die Lage des Radialanschlusses um jeweils 90° bezüglich des Zeigerwerks verstellt werden kann, indem der Membranfederträger passend gedreht und dann eingebaut wird, wie zuvor insbesondere unter Bezugnahme auf Fig. 4 beschrieben wurde.

Wird der Messkammerkörper 1 zum Einbau in Metallgehäuse verwendet, folgt man dem Montageschema der Fig. 6, wo gezeigt ist, wie der jeweils bestückte Messkammerkörper 1 mit einem Anschlussstutzen 6' bzw. 6" und einem Metallgehäuse kombiniert werden kann. Der Anschlussstutzen 6' für den Radialanschluss wird, wie in Fig. 6 zu erkennen ist, durch eine geeignete Öffnung in einem Metallgehäuse radial eingeführt und der bestückte Messkammerkörper 1 wird lediglich in die entsprechende Bohrung des Anschlussstutzens 6 eingesteckt. Der Anschlussstutzen 6' selbst wird vorzugsweise mit einem geeigneten Befestigungsmittel, wie einer Schraube, am Gehäuseboden festgelegt. Auch bei dieser Gestaltung des Druckmessgeräts erfolgt die Ausrichtung des Anschlussstutzens nach oben, unten, rechts oder links bei der radialen Anordnung durch entsprechendes Einstecken des Membranfederträgers in den Messkammerkörper.

Soll ein axial anzuschließendes Druckmessgerät mit Metallgehäuse produziert werden, folgt man der äußersten rechten Linie in dem Montageschema gemäß Fig. 6, wonach der bestückte Messkammerkörper in den Anschlussstutzen 6" eingedrückt wird, wodurch ebenfalls die dichte Verbindung hergestellt wird, und dieser Aufbau wird dann in eine entsprechende Bohrung im Metallgehäuse geführt und der Anschlussstutzen 6'' wird an seiner Halteplatte mit geeigneten Befestigungsmitteln (hier Schrauben) festgelegt. Im Fall des Anschlussstutzens 6' bzw. 6" kann sowohl die Vormontage des Stutzens an das Metallgehäuse und die anschließende Anbringung des Messkammerkörpers erfolgen, als auch umgekehrt zunächst der Messkammerkörper mit dem Anschlussstutzen verbunden, diese Baugruppe dann in das Gehäuse eingesetzt und darin festgeschraubt werden. Anschließend werden, wie in Fig. 6 nicht gezeigt, aber in Fig. 1 und 2 angedeutet ist, die weiteren Elemente wie Zifferblatt, Zeiger und Deckglas aufmontiert. Die Festlegung des Deckglases erfolgt durch Aufrasten. Dies gilt nicht nur für die in Fig. 1 und 2 gezeigten Kunststoffgehäuse sondern erfolgt analog an eingeprägten Vorsprüngen in den Metallgehäusen, die in Fig. 6 durch Halbkreise angedeutet sind.

Wie sich aus der vorhergehenden Beschreibung ergibt, sind mit der erfindungsgemäßen Gestaltung eines Membranfedermanometers insbesondere die folgenden Vorteile erreicht:
- Die Abdichtung zwischen Membran und Druckmesskammer erfolgt durch Flächenpressung an einem Dichtring, so dass keine thermische Beanspruchung der Membranfeder auftritt und der komplizierte Lötschritt mit anschließender Dichtigkeitskontrolle entfallen kann.
- Durch die Verwendung eines immer gleichen Membranfederträgers, der mit geeigneten Aufnahmen versehen ist, um sowohl mit der Membranfeder als auch dem Messgetriebe zuvor bestückt zu werden, lässt sich ein vereinfachter Fertigungsablauf erreichen, weil die Anzahl der verschiedenen Teile vermindert ist.
- Durch besondere Gestaltung des Gehäuses ist es möglich, einen Anschlussstutzen für das metallische Gewinde bei Kunststoffgehäusen zu verwenden, der sowohl für den radialen als auch für den axialen Anschluss geeignet ist.
- Durch die Gestaltung des Membranfederträgers und des Messkammerkörpers derart, dass diese in Montagelage miteinander verrasten, wird das Anbringen zusätzlicher Befestigungsmittel vermieden, wodurch sich eine Vereinfachung des Montagevorgangs ergibt.

## Patentansprüche

1. Druckmessgerät, mit
einem Messkammerkörper (1), der eine Messkammer (12) begrenzt,
einer Membranfeder (3), die die Messkammer des Messkammerkörpers (1) dicht verschließt und einem Druck in der Messkammer (12) folgend auslenkbar ist, und
einem Membranfederträger (2), der die Membranfeder (3) an einem Umfangsbereich abstützt, wobei
der Messkammerkörper (1) und der Membranfederträger (2) miteinander verbindbar sind und in verbundenem Zustand einen Dichtring (4) zwischen dem Umfangsbereich der Membranfeder (3) und dem Messkammerkörper (1) einspannen und wobei der Membranfederträger (2) einen Aufnehmer (5) zur Aufnahme der Membranauslenkung als zu messende Größe trägt,
**dadurch gekennzeichnet, dass** der Membranfederträger (2) mehrere Befestigungsaufnahmen (25, 26) hat, um wahlweise einen von verschiedenen Aufnehmertypen aufzunehmen und zu halten.

2. Druckmessgerät nach Anspruch 1, **dadurch gekennzeichnet, dass** der Messkammerkörper (1) becherförmig ist, im Becherbodenbereich die Messkammer (12) ausgebildet hat und die Becherwand (17) mit Aufnahmen (16) zur Festlegung des Membranfederträgers (2) versehen ist.

3. Druckmessgerät nach Anspruch 2, **dadurch gekennzeichnet, dass** der Membranfederträger (2) in die Becheröffnung des Messkammerkörpers (1) einführbar ist und an seinem Außenumfang mit Gegenstücken (22) versehen ist, die mit den Aufnahmen (16) des Messkammerkörpers (1) in Eingriff bringbar sind.

4. Druckmessgerät nach Anspruch 2, **dadurch gekennzeichnet, dass** die Aufnahmen Rastnuten (16) aufweisen.

5. Druckmessgerät nach Anspruch 3, **dadurch gekennzeichnet, dass** die Gegenstücke Rastklinken (22) zum Eingriff mit den Aufnahmen (16) haben.

6. Druckmessgerät nach einem der vorhergehenden Ansprüche, **dadurch gekennzeichnet, dass** der Membranfederträger (2) stirnseitig eine ringförmige Stützfläche zur Anlage mit der Membranfeder (3) hat, wobei am Umfang der Stützfläche Halteeinrichtungen (23) zur Festlegung der Membranfeder (3) an der Stützfläche vorgesehen sind.

7. Druckmessgerät nach Anspruch 6, **dadurch gekennzeichnet, dass** die Halteeinrichtungen (23) Vorsprünge mit einer Aufnahmekerbe zum Einrasten der Membranfeder (3) sind.

8. Druckmessgerät nach Anspruch 6, **dadurch gekennzeichnet, dass** die Halteeinrichtungen (23) Vorsprünge sind, die zur Festlegung der Membranfeder (3) bleibend verformbar sind.

9. Druckmessgerät nach Anspruch 6, **dadurch gekennzeichnet, dass** die Halteeinrichtungen (23) einen sich mindestens abschnittsweise entlang des Stützflächenumfangs erstreckenden Führungsvorsprung und eine Ultraschallschweißverbindung zwischen der Membranfeder und dem Membranfederträger umfassen.

10. Druckmessgerät nach einem der vorhergehenden Ansprüche, **dadurch gekennzeichnet, dass** der Membranfederträger (2) mindestens eine Befestigungseinrichtung (25, 26) zur Befestigung des Aufnehmers (5) hat.

11. Druckmessgerät nach Anspruch 10, **dadurch gekennzeichnet, dass** der Aufnehmer (5) ein Messgetriebe ist, das eine Auslenkung der Membranfeder (3) in eine Zeigerdrehung umwandelt.

12. Druckmessgerät nach Anspruch 1, **dadurch gekennzeichnet, dass** die Aufnehmertypen Messgetriebe mit oder ohne Nullpunktkorrektur umfassen.

13. Druckmessgerät nach einem der Ansprüche 10 bis 12, **dadurch gekennzeichnet, dass** der Membranfederträger (2) eine Befestigungsaufnahme für ein Zifferblatt (71) einer Anzeigeeinrichtung mit einem Zeiger (7) hat, der mit einem Messgetriebe (5) wirkverbunden ist.

14. Druckmessgerät nach einem der vorhergehenden Ansprüche, **dadurch gekennzeichnet, dass** im Umfangsbereich der Messkammer (12) im Messkammerkörper (1) eine Ringnut (18) vorgesehen ist, in der der Dichtring (4) geführt ist.

15. Druckmessgerät nach einem der vorhergehenden Ansprüche, **dadurch gekennzeichnet, dass** der Messkammerkörper (1) im Bereich der Messkammer (12) mit Verstärkungsrippen (14) ausgebildet ist.

16. Druckmessgerät nach einem der vorhergehenden Ansprüche 1 bis 15, **dadurch gekennzeichnet, dass** der Messkammerkörper (1) eine in Axialrichtung nach außen öffnende Anschlussöffnung (13) der Messkammer (12) hat, die mit einem Anschlussstutzen (6) dicht verbindbar ist.

17. Druckmessgerät nach einem der vorhergehenden Ansprüche 1 bis 15, **dadurch gekennzeichnet, dass** der Messkammerkörper (1) eine in Radialrichtung nach außen öffnende Anschlussöffnung (13) der Messkammer (12) hat, die mit einem Anschlussstutzen (6) dicht verbindbar ist.

18. Druckmessgerät nach Anspruch 16 oder 17, **dadurch gekennzeichnet, dass** in Verlängerung der Anschlussöffnung (13) ein Halteabschnitt (112) für den Anschlussstutzen (6) ausgebildet ist, wobei der Halteabschnitt (112) einstückig mit dem Messkammerkörper (1) ausgebildet ist.

19. Druckmessgerät nach Anspruch 18, **dadurch gekennzeichnet, dass** der Halteabschnitt einen Dichtungsabschnitt (111) und einen Rastabschnitt (113) hat, wobei der Anschlussstutzen (6) einen Dichtring und eine zugeordnete Rastnut hat, mit der der Rastabschnitt (113) verrastet, wenn der Dichtring am Dichtungsabschnitt (111) dichtend anliegt.

20. Druckmessgerät nach Anspruch 18, **dadurch gekennzeichnet, dass** der Halteabschnitt einen Dichtring (61) und eine Führung für einen Verriegelungsstift (62) hat, wobei der Anschlussstutzen (4) einen Dichtringsitz und eine Haltenut (63) hat, in die der Verriegelungsstift (62) einschiebbar ist, wenn der Dichtringsitz und der Dichtring (61) in dichtender Anlage sind.

21. Druckmessgerät nach einem der vorhergehenden Ansprüche, **dadurch gekennzeichnet, dass** der Messkammerkörper (1) in einem becherförmigen Gehäuse (11) angeordnet ist.

22. Druckmessgerät nach Anspruch 21, **dadurch gekennzeichnet, dass** der Messkammerkörper (1) und das Gehäuse (11) einstückig aus Kunststoff ausgebildet sind.

23. Druckmessgerät nach Anspruch 21, **dadurch gekennzeichnet, dass** der Messkammerkörper (1) in einem den Messkammerkörper umgebenden Gehäuse aufgenommen ist, das an dem Anschlussstutzen befestigt ist.

24. Druckmessgerät nach Anspruch 23, **dadurch gekennzeichnet, dass** das Gehäuse ein Metallgehäuse ist.

## Claims

1. Pressure gauge, with
a measuring chamber body (1) which bounds a measuring chamber (12),
a diaphragm spring (3) which tightly closes the measuring chamber of the measuring chamber body (1) and is deflectable in response to pressure in the measuring chamber (12), and
a diaphragm spring carrier (2) which supports the diaphragm spring (3) at the margin, wherein
the measuring chamber body (1) and diaphragm spring carrier (2) are connectable to each other and in the connected condition grip a seal ring (4) between the margin of the diaphragm spring (3) and the measuring chamber body (1) and wherein the diaphragm spring carrier (2) carries a sensing element (5) to sense the deflection of the diaphragm as the quantity to be measured,
**characterized in that** the diaphragm spring carrier (2) has a plurality of attachment seats (25, 26) to optionally seat and hold one of several different types of sensing element.

2. Pressure gauge according to Claim 1, **characterized in that** the measuring chamber body (1) is bowl-shaped, the measuring chamber (12) is formed in the bottom of the bowl, and the bowl wall (17) is provided with seats (16) to locate the diaphragm spring carrier (2).

3. Pressure gauge according to Claim 2, **characterized in that** the diaphragm spring carrier (2) is insertable into the bowl mouth of the measuring chamber body (1) and is provided on its outer periphery with mating parts (22) engageable with the seats (16) of the measuring chamber body (1).

4. Pressure gauge according to Claim 2, **characterized in that** the seats comprise snap grooves (16).

5. Pressure gauge according to Claim 3, **characterized in that** the mating parts have snap latches (22) for engagement with the seats (16).

6. Pressure gauge according to any one of the preceding claims, **characterized in that** the diaphragm spring carrier (2) has an annular bearing face on its end face for contact with the diaphragm spring (3), retaining devices (23) being provided at the rim of the bearing face to locate the diaphragm spring (3) on the bearing face.

7. Pressure gauge according to Claim 6, **characterized in that** the retaining devices (23) are projections with a seating notch for snap engagement of the diaphragm spring (3).

8. Pressure gauge according to Claim 6, **characterized in that** the retaining devices (23) are projections that are permanently deformable to fix the diaphragm spring (3).

9. Pressure gauge according to Claim 6, **characterized in that** the retaining devices (23) comprise a guide projection extending along at least portions of the rim of the bearing face and an ultrasonic weld between the diaphragm spring and the diaphragm spring carrier.

10. Pressure gauge according to any one of the preceding claims, **characterized in that** the diaphragm spring carrier (2) has at least one attachment device (25, 26) for attaching the sensing element (5).

11. Pressure gauge according to Claim 10, **characterized in that** the sensing element (5) is a gauge mechanism that converts a deflection of the diaphragm spring (3) into a rotation of a pointer.

12. Pressure gauge according to Claim 1, **characterized in that** the sensing element types include gauge mechanisms with or without zero-point correction.

13. Pressure gauge according to any one of Claims 10 to 12, **characterized in that** the diaphragm spring carrier (2) has an attachment seat for a dial (71) of an indicator with a pointer (7) actively connected to a gauge mechanism (5).

14. Pressure gauge according to any one of the preceding claims, **characterized in that** an annular groove (18) in which the seal ring (4) is guided is provided in the measuring chamber body (1) in the peripheral region of the measuring chamber (12).

15. Pressure gauge according to any one of the preceding claims, **characterized in that** the measuring chamber body (1) is formed with stiffening ribs (14) in the region of the measuring chamber (12).

16. Pressure gauge according to any one of the preceding claims 1 to 15, **characterized in that** the measuring chamber body (1) has an axially outwards opening connection port (13) of the measuring chamber (12) which is tightly connectable to a connecting spigot (6).

17. Pressure gauge according to any one of the preceding claims 1 to 15, **characterized in that** the measuring chamber body (1) has a radially outwards opening connection port (13) of the measuring chamber (12) which is tightly connectable to a connecting spigot (6).

18. Pressure gauge according to Claim 16 or Claim 17, **characterized in that** a retaining portion (112) for the connecting spigot (6) is formed as an extension of the connection port (13), the retaining portion (112) being formed integrally with the measuring chamber body (1).

19. Pressure gauge according to Claim 18, **characterized in that** the retaining portion has a sealing portion (111) and a snap engagement portion (113), the connecting spigot (6) having a seal ring and a cooperating snap groove in which the snap engagement portion (113) latches when the seal ring bears tightly on the ceiling portion (111).

20. Pressure gauge according to Claim 18, **characterized in that** the retaining portion has a seal ring (61) and a guide for a locking pin (62), the connecting spigot (4) having a seal ring seat and a retaining groove (63) into which the locking pin (62) is insertable when seal ring seat and seal ring (61) are in tight contact.

21. Pressure gauge according to any one of the preceding claims, **characterized in that** the measuring chamber body (1) is arranged inside a bowl-shaped casing (11).

22. Pressure gauge according to Claim 21, **characterized in that** the measuring chamber body (1) and the casing (11) are formed in one piece out of plastic material.

23. Pressure gauge according to Claim 21, **characterized in that** the measuring chamber body (1) is contained in a casing which surrounds the measuring chamber body and is attached to the connecting spigot.

24. Pressure gauge according to Claim 23, **characterized in that** the casing is a metal casing.

## Revendications

1. Appareil de mesure de pression, comportant
- un corps (1) qui délimite une chambre de mesure (12),
- un ressort à diaphragme (3), qui obture de manière étanche la chambre de mesure (12) dans le corps (1) et qui peut être dévié en fonction d'une pression dans la chambre de mesure (12),
- un support de ressort (2), qui maintient le ressort à diaphragme (3) sur une zone périphérique,
le corps avec chambre de mesure (1) et le support de ressort (2) pouvant être assemblés l'un à l'autre et serrant entre eux, dans la position assemblée, une bague d'étanchéité (4) entre la zone périphérique du ressort à diaphragme (3) et le corps (1), et le support de ressort (2) portant un capteur (5) destiné à détecter la déviation du diaphragme en tant que grandeur à mesurer,
**caractérisé en ce que** le support de ressort (2) comporte plusieurs logements de fixation (25, 26), destinés à recevoir et maintenir au choix un capteur parmi différents types de capteurs.

2. Appareil de mesure de pression selon la revendication 1, **caractérisé en ce que** le corps avec chambre de mesure (1) est en forme de godet, la chambre de mesure (12) est réalisée dans la zone du fond du godet et la paroi du godet (17) comporte des logements (16) pour la fixation du support de ressort (2).

3. Appareil de mesure de pression selon la revendication 2, **caractérisé en ce que** le support de ressort (2) peut être introduit dans l'ouverture du godet formant le corps avec chambre de mesure (1) et comporte sur sa périphérie extérieure des éléments complémentaires (22) qui peuvent être amenés en prise avec les logements (16) du corps avec chambre de mesure (1).

4. Appareil de mesure de pression selon la revendication 2, **caractérisé en ce que** les logements comportent des rainures de blocage (16).

5. Appareil de mesure de pression selon la revendication 3, **caractérisé en ce que** les éléments complémentaires ont des cliquets de verrouillage (22) destinés à entrer en prise dans les logements (16).

6. Appareil de mesure de pression selon l'une quelconque des revendications précédentes, **caractérisé en ce que** le support de ressort (2) comporte du côté frontal une face d'appui annulaire destinée à entrer en contact avec le ressort à diaphragme (3), des éléments de retenue (23) étant prévus sur la périphérie de la face d'appui pour fixer le ressort à diaphragme (3) sur la face d'appui.

7. Appareil de mesure de pression selon la revendication 6, **caractérisé en ce que** les éléments de retenue (23) sont des saillies avec une encoche de réception pour l'enclenchement du ressort à diaphragme (3).

8. Appareil de mesure de pression selon la revendication 6, **caractérisé en ce que** les éléments de retenue (23) sont des saillies qui restent déformables pour la fixation du ressort à diaphragme (3).

9. Appareil de mesure de pression selon la revendication 6, **caractérisé en ce que** les éléments de retenue (23) comportent une saillie de guidage, qui s'étend au moins par zones le long du pourtour de la face d'appui, et un assemblage par soudage aux ultrasons entre le ressort à diaphragme et le support de ressort.

10. Appareil de mesure de pression selon l'une quelconque des revendications précédentes, **caractérisé en ce que** le support de ressort (2) comporte au moins un élément de fixation (25, 26) pour la fixation du capteur (5).

11. Appareil de mesure de pression selon la revendication 10, **caractérisé en ce que** le capteur (5) est un mécanisme de mesure par lequel une déviation du ressort à diaphragme (3) est transformée en une rotation de l'aiguille.

12. Appareil de mesure de pression selon la revendication 1, **caractérisé en ce que** parmi les types de capteurs figurent des mécanismes de mesure avec ou sans compensation de décalage du zéro.

13. Appareil de mesure de pression selon l'une quelconque des revendications 10 à 12, **caractérisé en ce que** le support de ressort (2) comporte un logement de fixation pour un cadran (71) d'un dispositif d'affichage avec une aiguille (7) qui est en liaison active avec un mécanisme de mesure (5).

14. Appareil de mesure de pression selon l'une quelconque des revendications précédentes, **caractérisé en ce que** dans la zone périphérique de la chambre de mesure (12) dans le corps (1) est prévue une rainure annulaire (18) dans laquelle est posée la bague d'étanchéité (4).

15. Appareil de mesure de pression selon l'une quelconque des revendications précédentes, **caractérisé en ce que** le corps (1) est réalisé avec des nervures de renforcement (14) dans la zone de la chambre de mesure (12).

16. Appareil de mesure de pression selon l'une quelconque des revendications 1 à 15, **caractérisé en ce que** le corps avec chambre de mesure (1) comporte une ouverture de raccordement (13) dans la chambre de mesure (12), qui s'ouvre vers l'extérieur dans la direction axiale et qui peut être raccordée de manière étanche à une tubulure de raccordement (6).

17. Appareil de mesure de pression selon l'une quelconque des revendications 1 à 15, **caractérisé en ce que** le corps avec chambre de mesure (1) comporte une ouverture de raccordement (13) dans la chambre de mesure (12), qui s'ouvre vers l'extérieur dans la direction radiale et qui peut être raccordée de manière étanche à une tubulure de raccordement (6).

18. Appareil de mesure de pression selon la revendication 16 ou 17, **caractérisé en ce qu'**une partie de retenue (112) pour la tubulure de raccordement (6) est réalisée dans le prolongement de l'ouverture de raccordement (13), la partie de retenue (112) étant réalisée d'un seul tenant avec le corps avec chambre de mesure (1).

19. Appareil de mesure de pression selon la revendication 18, **caractérisé en ce que** la partie de retenue comporte une partie d'étanchéité (111) et une partie d'arrêt (113), la tubulure de raccordement (16) étant munie d'une bague d'étanchéité et d'une rainure de blocage associée, dans laquelle s'enclenche la partie d'arrêt (113) lorsque la bague d'étanchéité est en appui étanche sur la partie d'étanchéité (111).

20. Appareil de mesure de pression selon la revendication 18, **caractérisé en ce que** la partie de retenue comporte une bague d'étanchéité (61) et un guidage pour un téton de verrouillage (62), la tubulure de raccordement (16) étant munie d'un logement pour bague d'étanchéité et d'une rainure de support (63) dans laquelle peut s'introduire le téton de verrouillage (62) lorsque le logement pour bague d'étanchéité et la bague d'étanchéité (61) sont en appui étanche.

21. Appareil de mesure de pression selon l'une quelconque des revendications précédentes, **caractérisé en ce que** le corps avec chambre de mesure (1) est agencé dans un boîtier (11) en forme de godet.

22. Appareil de mesure de pression selon la revendication 21, **caractérisé en ce que** le corps avec chambre de mesure (1) et le boîtier (11) sont réalisés d'un seul tenant en matière plastique.

23. Appareil de mesure de pression selon la revendication 21, **caractérisé en ce que** le corps avec chambre de mesure (1) est reçu dans un boîtier qui entoure ledit corps et qui est fixé sur la tubulure de raccordement.

24. Appareil de mesure de pression selon la revendication 23, **caractérisé en ce que** le boîtier est un boîtier métallique.
